# EUROPEAN PATENT APPLICATION

(11) **EP 3 576 251 A1**
(43) Date of publication of application: **04.12.2019**
(21) Application number: 18192472.1
(22) Date of filing: 04.09.2018
(51) Int. Cl.: H02J 9/06, H05B 37/02

(54) **MULTI-FUNCTION CONTROLLER**

(30) Priority: 30.05.2018 CN 201820822951 U
(71) Applicant: GuangDong LAC Smart Lighting Co., Ltd., 523061 Dong Guan City, Guangdong (CN)
(72) Inventor: HE, Xiao Ming, Humen Town, Dong Guan City Guangdong 523061 (CN)
(74) Representative: Misselhorn, Hein-Martin

(57) **Abstract**

A multi-function controller, including a rectifier module, a power supply module, a sensor module, a drive module, a detection module, a charge/discharge management module, an emergency module, a first light source group, and a second light source group. An output end of the sensor module is connected to a second input end of the drive module. An output end of the drive module is connected to a first end of the first light source group. A second end of the first light source group is connected to an output end of the rectifier module. An output end of the power supply module is further connected to each of an input end of the detection module and an input end of the charge/discharge management module. An output end of the detection module is connected to an input end of the emergency module. An output end of the emergency module is connected to a first end of the second light source group. An output end of the charge/discharge management module is connected to a second end of the second light source group. The foregoing controller has functions of both sensing lighting and emergency lighting

## Description

### BACKGROUND

### Technical Field

The present utility model relates to the field of lighting control technologies, and in particular, to a multi-function controller.

### Related Art

As living standards improve, increasingly higher requirements are put on product intelligence. For an existing light fixture, a user is not satisfied to control on/off of the light fixture by manually control a switch, instead, the user hopes that the light fixture can intelligently sense whether there is a moving object in a range, to automatically control on/off of the lighting apparatus. Therefore, some existing light fixtures have sensing functions.

However, due to simple structures, the existing light fixtures have only sensing lighting functions, failed to meet more requirements of users.

### SUMMARY

In view of this, it is necessary to provide a multi-function controller.

A multi-function controller, including a rectifier module, a power supply module, a sensor module, a drive module, a detection module, a charge/discharge management module, and an emergency module.

An output end of the rectifier module is connected to an input end of the power supply module, an output end of the power supply module is connected to each of a first input end of the sensor module and a first input end of the drive module, an output end of the sensor module is connected to a second input end of the drive module, an output end of the drive module is configured to be connected to a first end of a first light source group, and the output end of the rectifier module is configured to be connected to a second end of the first light source group.

The output end of the power supply module is further connected to each of an input end of the detection module and an input end of the charge/discharge management module, an output end of the detection module is connected to an input end of the emergency module, an output end of the emergency module is configured to be connected to a first end of a second light source group, and an output end of the charge/discharge management module is configured to be connected to a second end of the second light source group.

In an embodiment, the multi-function controller further includes a light-control module, an input end of the light-control module is connected to the output end of the power supply module, and an output end of the light-control module is connected to a second input end of the sensor module.

In an embodiment, the multi-function controller further includes a sensing and adjusting module, an input end of the sensing and adjusting module is configured to be grounded, and an output end of the sensing and adjusting module is connected to a third input end of the sensor module.

In an embodiment, the sensing and adjusting module includes a dip switch, a first input contact, a second input contact, a third output contact, and a fourth input contact of the dip switch are used as the input end of the sensing and adjusting module to be configured to be grounded, and a first output contact, a second output contact, the third output contact, and a fourth output contact of the dip switch are used as the output end of the sensing and adjusting module to be configured to be connected to the third input end of the sensor module.

In an embodiment, the multi-function controller further includes a color-adjusting module, the output end of the drive module is configured to be connected to the first end of the first light source group by using the color-adjusting module.

In an embodiment, the first light source group includes a first color temperature LED lamp and a second color temperature LED lamp, and the color-adjusting module includes a dual-control switch.

The output end of the drive module is connected to a control end of the dual-control switch, a first contact of the dual-control switch is configured to be connected to a first end of the first color temperature LED lamp, the output end of the rectifier module is configured to be connected to a second end of the first color temperature LED lamp, a second contact of the dual-control switch is configured to be connected to a first end of the second color temperature LED lamp, and the output end of the rectifier module is configured to be connected to a second end of the second color temperature LED lamp.

In an embodiment, the first light source group includes a first color temperature LED lamp and a second color temperature LED lamp, and the color-adjusting module includes a three-control switch.

The output end of the drive module is connected to a control end of the three-control switch, a first contact and a third contact of the three-control switch are each configured to be connected to a first end of the first color temperature LED lamp, the output end of the rectifier module is configured to be connected to a second end of the first color temperature LED lamp, a second contact and the third contact of the three-control switch are each configured to be connected to a first end of the second color temperature LED lamp, and the output end of the rectifier module is configured to be connected to a second end of the second color temperature LED lamp.

In an embodiment, the multi-function controller further includes a voltage regulator module, and the output end of the power supply module is connected to the first input end of the sensor module by using the voltage regulator module.

In an embodiment, the emergency module includes an emergency chip and a switching transistor, a detection signal input pin of the emergency chip is used as the input end of the emergency module to be connected to the output end of the detection module, a switch signal output pin of the emergency chip is connected to a control end of the switching transistor, a first electrode of the switching transistor is configured to be grounded, and a second electrode of the switching transistor is used as the output end of the emergency module to be connected to the first end of the second light source group.

In an embodiment, the charge/discharge management module includes a battery, a positive electrode of the battery is used as the output end of the charge/discharge management module to be connected to the second end of the second light source group, the positive electrode of the battery is further used as the input end of the charge/discharge management module to be connected to the output end of the power supply module, and a negative electrode of the battery is configured to be grounded.

For the foregoing multi-function controller, on the one hand, the sensor module is provided. When sensing that there is a moving object, the sensor module sends a sensing signal to the drive module, and the drive module drives the first light source group to provide light to the moving object. On the other hand, the charge/discharge management module is provided. When the power supply module outputs a voltage, the charge/discharge management module performs charging. The detection module is provided. When detecting that the power supply module outputs no voltage, the detection module sends a detection signal to the emergency module, the emergency module outputs a turn-on signal to the second light source group, and the charge/discharge management module performs discharging at the same time, so that the second light source group can also provide emergency lighting in a case of power failure. The foregoing controller has both functions of controlling both sensing lighting and emergency lighting.

### BRIEF DESCRIPTION OF THE DRAWINGS

FIG. 1 is a schematic diagram of modules of a controller according to an embodiment of the present utility model;
FIG. 2 is a schematic diagram of circuits of a controller according to an embodiment; and
FIG. 3 is a schematic diagram of modules of a controller according to another embodiment of the present utility model.

### DETAILED DESCRIPTION

To facilitate understanding of the present utility model, the following describes the present utility model more comprehensively with reference to the related accompanying drawings. Preferred implementations are shown in the accompanying drawings of the present utility model. However, the present utility model may be implemented in many different forms being not limited to the implementations described herein. On the contrary, the implementations are provided to make the content disclosed in the present utility model be understood more thoroughly and comprehensively.

Unless otherwise defined, all technical and scientific terms used herein have the same meaning as commonly understood by persons skilled in the art to which the present utility model belongs. Herein, the terms used in this specification of the present utility model are merely for describing specific implementations instead of limiting the present utility model. The term "and/or" used herein includes any or all possible combinations of one or more associated listed items.

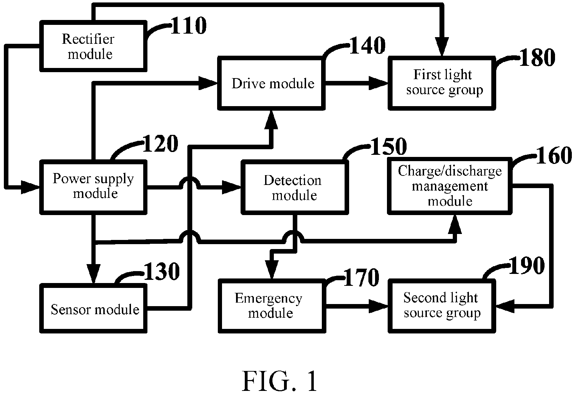

As shown in FIG. 1, FIG. 1 is a schematic structural diagram of functional modules of a multi-function controller 10 according to an embodiment of the present utility model. The controller 10 includes a rectifier module 110, a power supply module 120, a sensor module 130, a drive module 140, a detection module 150, a charge/discharge management module 160, and an emergency module 170.

An output end of the rectifier module 110 is connected to an input end of the power supply module 120. An output end of the power supply module 120 is connected to each of a first input end of the sensor module 130 and a first input end of the drive module 140. An output end of the sensor module 130 is connected to a second input end of the drive module 140. An output end of the drive module 140 is connected to a first end of a first light source group 180. A second end of the first light source group 180 is connected to the output end of the rectifier module 110.

The output end of the power supply module 120 is further connected to each of an input end of the detection module 150 and an input end of the charge/discharge management module 160. An output end of the detection module 150 is connected to an input end of the emergency module 170. An output end of the emergency module 170 is connected to a first end of a second light source group 190. An output end of the charge/discharge management module 160 is connected to a second end of the second light source group 190.

Specifically, the rectifier module 110 is configured to convert an accessed 220 V mains alternating current into a low-voltage direct current. The power supply module 120 is configured to convert the low-voltage direct current output by the rectifier module 110 into a working voltage used by a next circuit. The sensor module 130 is configured to sense whether there is a moving object and output a sensing signal when there is a moving object. The drive module 140 is configured to output a drive signal when receiving the sensing signal. The first light source group 180 is configured to provide light when receiving the drive signal. The detection module 150 is configured to output a detection signal when detecting that the power supply 120 outputs no voltage. The emergency module 170 is configured to output a turn-on signal to the second light source group 190 when receiving the detection signal. The charge/discharge management module 160 is configured to performs charging when the power supply module 120 outputs a voltage and performs discharging when the power supply module 120 outputs no voltage, to provide a voltage to the second light source group 190, so that the second light source group 190 can also provide emergency lighting in a case of power failure.

For the foregoing controller, on the one hand, the sensor module is provided. When sensing that there is a moving object, the sensor module sends a sensing signal to the drive module, and the drive module drives the first light source group to emit light for the moving object. On the other hand, the charge/discharge management module is provided. When the power supply module outputs a voltage, the charge/discharge management module performs charging. The detection module is provided. When detecting that the power supply module outputs no voltage, the detection module sends a detection signal to the emergency module, the emergency module outputs a turn-on signal to the second light source group, and the charge/discharge management module performs discharging at the same time, so that the second light source group can also provide emergency lighting in a case of power failure. The foregoing controller has both functions of controlling both sensing lighting and emergency lighting.

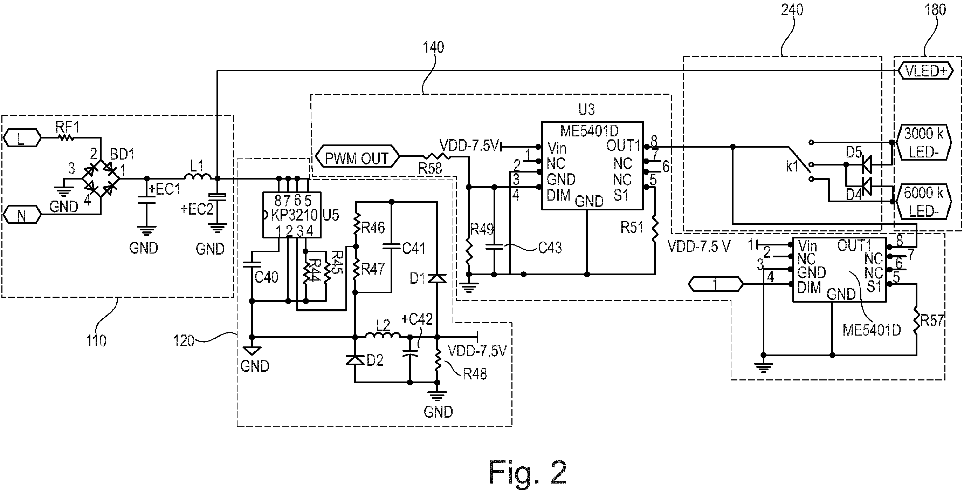

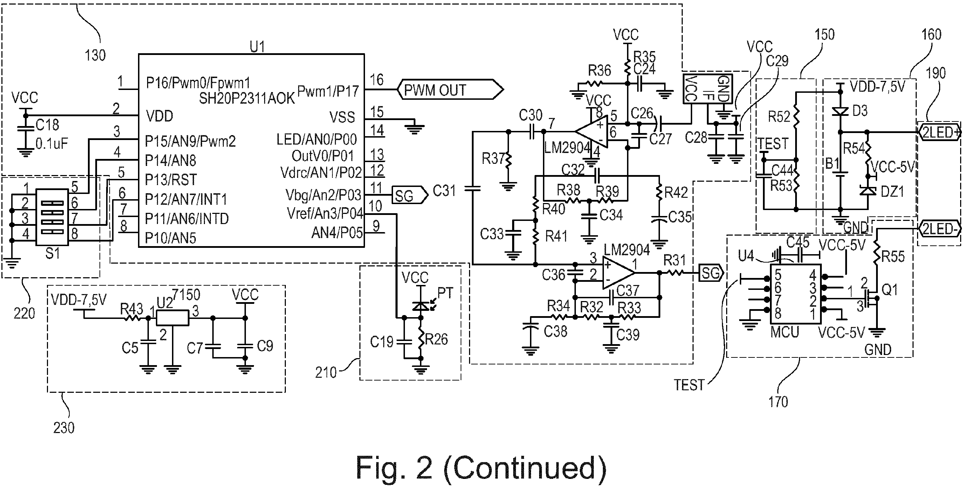

In an embodiment, as shown in FiG.2, the rectifier module 110 includes a rectifier bridge BD1. A first input end of the rectifier bridge BD1 is connected to a hot terminal. A second input end of the rectifier bridge BD1 is connected to a neutral terminal. A first output end of the rectifier bridge BD1 is configured to be grounded. A second output end of the rectifier bridge BD1 is used as the output end of the rectifier module 110 to be separately connected to the input end of the power supply module 120. It should be noted that, the rectifier module 110 further includes a peripheral circuit of the rectifier bridge BD1. This is the prior art which has nothing to do with improvement of this application, and details are not described herein.

In an embodiment, as shown in FIG. 2, the power supply module 120 includes a power supply chip U5. Voltage input pins 5, 6, 7, and 8 of the power supply chip U5 are used as the input end of the power supply module 120 to be connected to the output end of the rectifier module. A voltage output pin 3 of the power supply chip U5 is used as the output end of the power supply module 120 to be connected to each of the first input end of the sensor module, the first input end of the drive module, the input end of the detection module, and the input end of the charge/discharge management module. The power supply chip U5 is configured to convert the low-voltage direct current output by the rectifier module 110 into the working voltage used by the next circuit. It should be noted that, the power supply module 120 further includes a peripheral circuit of the power supply chip U5. This is the prior art which has nothing to do with improvement of this application, and details are not described herein.

In an embodiment, as shown in FIG. 2, the sensor module 130 includes a sensor chip U1 and an antenna IF. An output end of the antenna IF is connected to a first sensor signal input pin 11 of the sensor chip U1. A power input pin 2 of the sensor chip U1 is used as the first input end of the sensor module 130 to be connected to the output end of the power supply module 120. A control signal output pin 16 of the sensor chip U1 is used as the output end of the sensor module 130 to be connected to the second input end of the drive module 140. It should be noted that, the sensor module 130 further includes a peripheral circuit of the antenna IF and a peripheral circuit of the sensor chip U1. This is the prior art which has nothing to do with improvement of this application, and details are not described herein.

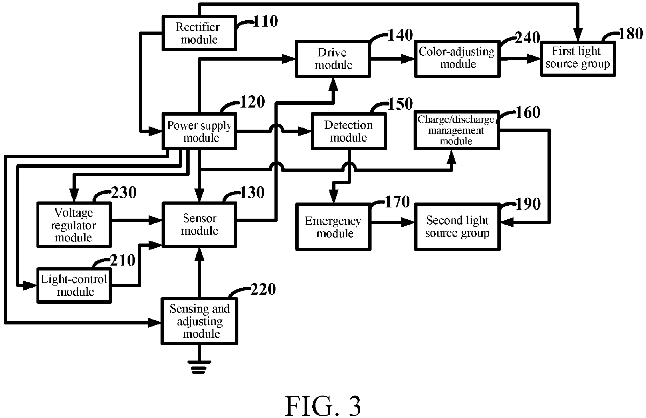

To avoid that the first light source module is used to emit light after a moving object appears in a relatively bright luminance, in an embodiment, as shown in FIG. 3, the controller further includes a light-control module 210. An input end of the light-control module 210 is connected to the output end of the power supply module 120. An output end of the light-control module 210 is connected to the second input end of the sensor module 130. Specifically, in an embodiment, as shown in FIG. 2, the light-control module 210 includes a photosensitive switch PT. A first end of the photosensitive switch PT is used as the input end of the light-control module 210 to be connected to the output end of the power supply module 120. A second end of the photosensitive switch PT is used as the output end of the light-control module 210 to be connected to the second input end of the sensor module 130. It should be noted that, the light-control module 210 further includes a peripheral circuit of the photosensitive switch PT. This is the prior art which has nothing to do with improvement of this application, and details are not described herein.

For example, the second end of the photosensitive switch PT is connected to a second sensing signal pin 10 of the sensor chip U1. In an environment when there is relatively bright luminance such as the day time, the photosensitive switch senses relatively high luminance and outputs a sensing signal to the sensor module, so that the sensor module does not output a control signal to the drive module even when sensing that there is a moving object. Therefore, it is avoided that the first light source module provides light after a moving object appears when there is relatively high luminance, and energy is saved.

To adjust the control signal output by the sensor module to control sensing intensity and sensing time period of the first light source group, as shown in FIG. 3, in an embodiment, the controller further includes a sensing and adjusting module 220. An input end of the sensing and adjusting module 220 is configured to be grounded. An output end of the sensing and adjusting module 220 is configured to be connected to the third input end of the sensor module 130.

Specifically, in an embodiment, the sensing and adjusting module 220 includes a dip switch S1. A first input contact 1, a second input contact 2, a third output contact 3, and a fourth input contact 4 of the dip switch S1 are used as the input end of the sensing and adjusting module to be configured to be grounded. A first output contact 5, a second output contact 6, a third output contact 7, and a fourth output contact 8 of the dip switch S1 are used as the output end of the sensing and adjusting module 220 to be connected to the third input end of the sensor module 130. In an embodiment, the dip switch is a toggle switch or a lever switch. By changing a connection and grounding status of the input contacts and the output contacts of the dip switch, the control signal output by the sensor module may be adjusted to control the sensing intensity and the sensing time period of the first light source group. For example, when the first output contact 5 of the dip switch is controlled to be grounded by using the first input contact 1, and the second output contact 6 to be grounded without using the second input contact 2, the sensing intensity of the first light source group is 50%. When the first output contact 5 of the dip switch is controlled to be grounded by using the first input contact 1, and the second output contact 6 to be grounded by using the second input contact 2, the sensing intensity of the first light source group is 110%. When the third output contact 7 of the dip switch is controlled to be grounded by using the third input contact 3, the sensing time period of the first light source group is 10 seconds. When the third output contact 7 of the dip switch is controlled to be grounded without using the third input contact 3, the sensing time period of the first light source group is 60 seconds. When the fourth output contact 8 of the dip switch is controlled to be grounded by using the fourth input contact 4, the first light source group emits light unconditionally. When the fourth output contact 8 of the dip switch is controlled to be grounded by using the fourth input contact 4, the first light source group emits light only when ambient brightness is less than 20 lux.

To provide an appropriate working voltage to the sensor module, in an embodiment, as shown in FIG. 3, the controller further includes a voltage regulator module 230. The output end of the power supply module 120 is connected to the first input end of the sensor module 130 by using the voltage regulator module 230. Specifically, in an embodiment, the voltage regulator module 230 includes a voltage regulator tube U2. A first end of the voltage regulator tube U2 is connected to the output end of the power supply module 120. The second end of the voltage regulator tube U2 is configured to be grounded. A third end of the voltage regulator tube U2 is configured to be connected to the first input end of the sensor module 130. It should be noted that, the voltage regulator module further includes a peripheral circuit of the voltage regulator tube U2. This is the prior art which has nothing to do with improvement of this application, and details are not described herein.

In an embodiment, as shown in FIG. 2, the drive module 140 includes a first drive chip U3. A control signal input pin 4 of the first drive chip U3 is used as the second input end of the drive module 140 to be connected to the first input end of the sensor module 130. A power input pin 1 of the first drive chip U3 is used as the first input end of the drive module 140 to be connected to the output end of the power supply module 120. A drive signal output pin 8 of the first drive chip U3 is used as the output end of the drive module 140 to be connected to the first end of the first light source group 180. It should be noted that, the drive module 140 further includes a peripheral circuit of the first drive chip U3. This is the prior art which has nothing to do with improvement of this application, and details are not described herein.

To improve power of the drive module, in an embodiment, as shown in FIG. 2, the drive module further includes a second drive chip U6. A control signal input pin 4 of the second drive chip U6 is connected to the first input end of the sensor module 130. A power input pin 1 of the second drive chip U6 is connected to the output end of the power supply module 120. A drive signal output pin 8 of the second drive chip U6 is connected to the first end of the first light source group 180. The drive module uses two drive chips, effectively improving the power of the drive module.

In an embodiment, the first light source group 190 includes an LED lamp. A negative electrode of the LED lamp is used as the first end of the first light source group 190 to be connected to the output end of the drive module 140. A positive electrode of the LED lamp is used as the second end of the first light source group to be connected to the output end of the rectifier module.

To make the first light source group emit light of different color temperatures, in an embodiment, as shown in FIG. 3, the controller further includes a color-adjusting module 240. The output end of the drive module 140 is connected to the first end of the first light source group 180 by using the color-adjusting module 240. The color-adjusting module 240 is configured to make the first light source group 180 emit light of different color temperatures.

In a feasible implementation, the first light source group includes a first color temperature LED lamp and a second color temperature LED lamp, and the color-adjusting module includes a dual-control switch. The output end of the drive module is connected to a control end of the dual-control switch. A first end of the first color temperature LED lamp is connected to a first contact of the dual-control switch. A second end of the first color temperature LED lamp is connected to the output end of the rectifier module. A first end of the second color temperature LED lamp is connected to a second contact of the dual-control switch. A second end of the second color temperature LED lamp is connected to the output end of the rectifier module. Through selection performed by using the dual-control switch, the first color temperature LED lamp of the first light source group can emit light of a first color temperature, or the second color temperature LED lamp of the first light source group can emit light of a second color temperature. For example, the first color temperature is 1300 K, and the second color temperature is 1600 K.

In another feasible implementation, as shown in FIG. 2, the first light source group 180 includes a first color temperature LED lamp and a second color temperature LED lamp, and the color-adjusting module includes a three-control switch K1. The output end of the drive module 140 is connected to a control end of the three-control switch K1. A first end of the first color temperature LED lamp is connected to each of a first contact and a third contact of the three-control switch K1. A second end of the first color temperature LED lamp is connected to the output end of the rectifier module 110. A first end of the second color temperature LED lamp is connected to each of a second contact and the third contact of the three-control switch K1. The second end of the second color temperature LED lamp is connected to the output end of the rectifier module 110. Through selection performed by using the three-control switch, the first color temperature LED lamp of the first light source group can emit light of the first color temperature, or the second color temperature LED lamp of the first light source group can emit light of the second color temperature, or the first color temperature LED lamp and the second color temperature LED lamp of the first light source group are combined to emit light of combined color temperatures. For example, the first color temperature is 1300 K, and the second color temperature is 1600 K.

In an embodiment, as shown in FIG. 2, the detection module 150 includes a resistor R52, a resistor R53, and a capacitor C44. The resistor R53 and the capacitor C44 are connected in parallel. First ends that are of the resistor R53 and the capacitor C44 and that are connected in parallel are connected to a first end of the resistor R52. A second end of the resistor R52 is used as the input end of the detection module 150 to be connected to the output end of the power supply module 120. Second ends that are of the resistor R53 and the capacitor C44 and that are connected in parallel are grounded. The first end of the resistor R52 is further configured to be used as the output end of the detection module 150 to be connected to the input end of the emergency module 170.

In an embodiment, as shown in FIG. 2, the emergency module 170 includes an emergency chip U4 and a switching transistor Q1. A detection signal input pin 5 of the emergency chip U4 is used as the input end of the emergency module 170 to be connected to the output end of the detection module 150. A switch signal output pin 2 of the emergency chip U4 is connected to a control end of the switching transistor Q1. A first electrode of the switching transistor Q1 is configured to be grounded. A second electrode of the switching transistor Q1 is used as the output end of the emergency module 170 to be connected to the first end of the second light source group 190. In the embodiments, all of the sensor chip, the first drive chip, the second drive chip, the emergency chip, and the like may be purchased from a market.

In an embodiment, as shown in FIG. 2, the charge/discharge management module 160 includes a battery B1. A positive electrode of the battery B1 is used as the output end of the charge/discharge management module 160 to be connected to the second end of the second light source group 190. The positive electrode of the battery B1 is further used as the input end of the charge/discharge management module 160 to be connected to the output end of the power supply module 120. A negative electrode of the battery B1 is configured to be grounded. It should be noted that, the charge/discharge management module 160 further includes a peripheral circuit of the battery B1. This is the prior art which has nothing to do with improvement of this application, and details are not described herein.

In an embodiment, the second light source group 190 includes an LED lamp. A negative electrode of the LED lamp is used as the first end of the second light source group 190 to be connected to the output end of the emergency module. A positive electrode of the LED lamp is used as the second end of the second light source group to be connected to the output end of the charge/discharge management module. Specifically, as shown in FIG. 2, when the switching transistor Q1 is conducted, the battery B1, the LED lamp, and the switching transistor Q1 form a closed loop, and the battery provides a voltage to the LED lamp, so that the LED lamp emits light.

For the foregoing controller, in a first aspect, the sensor module is provided. When sensing that there is a moving object, the sensor module sends a sensing signal to the drive module, and the drive module drives the first light source group to provide light to the moving object.

In a second aspect, the charge/discharge management module is provided. When the power supply module outputs a voltage, the charge/discharge management module performs charging. The detection module is provided. When detecting that the power supply module outputs no voltage, the detection module sends a detection signal to the emergency module. The emergency module outputs a turn-on signal to the second light source group, and the charge/discharge management module performs discharging at the same time, so that the second light source group can also provide emergency lighting in a case of power failure. The foregoing controller has functions of both sensing lighting and emergency lighting.

In a third aspect, the color-adjusting module is provided. By using the color-adjusting module, any one or more of two or more of LED lamps of different color temperatures may be selected to emit light, so that lamp beads of different color temperatures are lit.

In a fourth aspect, by using the light-control module, when particular luminance is detected, a sensor circuit is prevented from outputting a control signal to the drive module, and it is avoided that the first light source module provides light after a moving object appears when there is relatively high luminance, so that energy is saved.

It may be understood that, all of the rectifier module, the power supply module, the sensor module, the drive module, the detection module, the charge/discharge management module, the emergency module, the first light source group, the second light source group, and the like in the embodiments of the present utility model may be implemented by using the prior art or products available on the market. The protection scope of the present utility model and the embodiments of the present utility model includes connection relations of specific structures of the rectifier module, the power supply module, the sensor module, the drive module, the detection module, the charge/discharge management module, the emergency module, the first light source group, the second light source group, and the like and combined application thereof instead of the specific structures. A particular technical effect can be achieved by using the connection relations of the structures and the combined application thereof.

Technical features of the foregoing embodiments may be randomly combined. To make description concise, not all possible combinations of the technical features in the foregoing embodiments are described. However, as long as combinations of these technical features do not contradict each other, it should be considered that the combinations all fall within the scope recorded by this specification.

The above embodiments only express several implementations of the present utility model, which are described specifically and in detail, and therefore cannot be construed as a limitation to the patent scope of the present utility model. It should be noted that, persons of ordinary skill in the art may make various changes and improvements without departing from the ideas of the present utility model, which shall all fall within the protection scope of the present utility model. Therefore, the protection scope of the patent of the present utility model shall be subject to the claims.

## Claims

1. A multi-function controller, comprising a rectifier module, a power supply module, a sensor module, a drive module, a detection module, a charge/discharge management module, and an emergency module, wherein
an output end of the rectifier module is connected to an input end of the power supply module, an output end of the power supply module is connected to each of a first input end of the sensor module and a first input end of the drive module, an output end of the sensor module is connected to a second input end of the drive module, an output end of the drive module is configured to be connected to a first end of a first light source group, and the output end of the rectifier module is configured to be connected to a second end of the first light source group; and
the output end of the power supply module is further connected to each of an input end of the detection module and an input end of the charge/discharge management module, an output end of the detection module is connected to an input end of the emergency module, an output end of the emergency module is configured to be connected to a first end of a second light source group, and an output end of the charge/discharge management module is configured to be connected to a second end of the second light source group.

2. The multi-function controller according to claim 1, further comprising a light-control module, wherein an input end of the light-control module is connected to the output end of the power supply module, and an output end of the light-control module is connected to a second input end of the sensor module.

3. The multi-function controller according to claim 1, further comprising a sensing and adjusting module, wherein an input end of the sensing and adjusting module is configured to be grounded, and an output end of the sensing and adjusting module is connected to a third input end of the sensor module.

4. The multi-function controller according to claim 3, wherein the sensing and adjusting module comprises a dip switch, a first input contact, a second input contact, a third output contact, and a fourth input contact of the dip switch are used as the input end of the sensing and adjusting module to be configured to be grounded, and a first output contact, a second output contact, the third output contact, and a fourth output contact of the dip switch are used as the output end of the sensing and adjusting module to be configured to be connected to the third input end of the sensor module.

5. The multi-function controller according to claim 1, further comprising a color-adjusting module, wherein the output end of the drive module is configured to be connected to the first end of the first light source group by using the color-adjusting module.

6. The multi-function controller according to claim 5, wherein the first light source group comprises a first color temperature LED lamp and a second color temperature LED lamp, and the color-adjusting module comprises a dual-control switch; and
the output end of the drive module is connected to a control end of the dual-control switch, a first contact of the dual-control switch is configured to be connected to a first end of the first color temperature LED lamp, the output end of the rectifier module is configured to be connected to a second end of the first color temperature LED lamp, a second contact of the dual-control switch is configured to be connected to a first end of the second color temperature LED lamp, and the output end of the rectifier module is configured to be connected to a second end of the second color temperature LED lamp.

7. The multi-function controller according to claim 5, wherein the first light source group comprises a first color temperature LED lamp and a second color temperature LED lamp, and the color-adjusting module comprises a three-control switch; and
the output end of the drive module is connected to a control end of the three-control switch, a first contact and a third contact of the three-control switch are each configured to be connected to a first end of the first color temperature LED lamp, the output end of the rectifier module is configured to be connected to a second end of the first color temperature LED lamp, a second contact and the third contact of the three-control switch are each configured to be connected to a first end of the second color temperature LED lamp, and the output end of the rectifier module is configured to be connected to a second end of the second color temperature LED lamp.

8. The multi-function controller according to claim 1, further comprising a voltage regulator module, wherein the output end of the power supply module is connected to the first input end of the sensor module by using the voltage regulator module.

9. The multi-function controller according to claim 1, wherein the emergency module comprises an emergency chip and a switching transistor, a detection signal input pin of the emergency chip is used as the input end of the emergency module to be connected to the output end of the detection module, a switch signal output pin of the emergency chip is connected to a control end of the switching transistor, a first electrode of the switching transistor is configured to be grounded, and a second electrode of the switching transistor is used as the output end of the emergency module to be connected to the first end of the second light source group.

10. The multi-function controller according to claim 1, wherein the charge/discharge management module comprises a battery, a positive electrode of the battery is used as the output end of the charge/discharge management module to be connected to the second end of the second light source group, the positive electrode of the battery is further used as the input end of the charge/discharge management module to be connected to the output end of the power supply module, and a negative electrode of the battery is configured to be grounded.
